# EUROPEAN PATENT APPLICATION

(11) **EP 1 909 070 A1**
(43) Date of publication of application: **09.04.2008**
(21) Application number: 06021022.6
(22) Date of filing: 06.10.2006
(51) Int. Cl.: G01C 21/36, G08G 1/0968

(54) **Vehicle electronic system coupling a mobile navigation module to a vehicle audio module**

(71) Applicant: Harman Becker Automotive Systems GmbH, 76307 Karlsbad (DE)
(72) Inventor: Ohler, Jens, 75249 Kieselbronn (DE); Roessger, Peter, 72631 Aichtal (DE); Breining, Klaus, 71522 Backnang (DE)
(74) Representative: Bertsch, Florian Oliver

(57) **Abstract**

A vehicle electronic system (18) coupling a mobile navigation module (11) to a vehicle audio module (1) comprises the vehicle audio module (1) and the mobile navigation module (11). The vehicle audio module (1) comprises a first operating unit (15) providing an interface to the user, a first control unit (16) controlling the first operating unit (15), and a first coupler (9) for coupling the mobile navigation module (11) to the vehicle audio module (1). The mobile navigation module (11) comprises a second operating unit (19) for providing an user interface, a second control unit (20) controlling the second operating unit (19), and a second coupler (14). Upon detection that the mobile navigation module (11) is coupled to the vehicle audio module (1), the first control unit (16) controls at least parts of the second operating unit (20).

## Description

This invention relates to a vehicle electronic system coupling a mobile navigation module to a vehicle audio module and a method for coupling a mobile navigation module to a vehicle audio module.

Navigation systems are widely used for hiking, biking, city sightseeing, vehicle navigation, and so on. Special navigation systems for each kind of the above-mentioned applications are designed and available in the market, for example handheld mobile navigation systems for hiking, navigation systems mountable on a bicycle for biking, and navigation systems built into vehicles for vehicle navigation. A vehicle navigation system fixedly installed in a vehicle cannot be used by the user outside the vehicle, for example during hiking, and cannot be taken into another vehicle, for example from a private car into a rental car, and therefore many people additionally use a mobile navigation system, which can be used outside a vehicle, for example for biking and hiking, and which can also be used inside a vehicle. When used inside a vehicle, power supply cables need to be mounted from for example the cigarette lighter to the mobile navigation device, which usually leads to obstruction of displays or buttons, and the mobile navigation device is fixed in a special support at the dashboard or the windshield which also leads to obstruction of displays or buttons or the sight out of the windshield. Furthermore, the audio output of the mobile navigation device, for example for routing commands, is in most cases not appropriate for a use inside a vehicle, especially when the vehicle audio system is also producing audio output. Finally, supporting the mobile navigation device on a support mounted at the dashboard or the windshield is in most cases not very aesthetic, destroying the interior design of the vehicle, and may cause a danger during an accident of the vehicle.

Therefore, there is a need for an integration of a mobile navigation system into the vehicle's infrastructure, wherein the mobile navigation device is fixed at an appropriate position inside the vehicle, and integrated in the operating means of the vehicle, for example audio output and speech recognition input, and wherein the mobile navigation device is still operable as stand alone unit outside the vehicle.

According to the invention, this need is met by a vehicle electronic system as defined in claim 1, and a method for coupling a mobile navigation module to a vehicle audio module as defined in claim 23. The dependent claims define preferred and advantageous embodiments of the invention.

According to an aspect of the invention, a vehicle electronic system coupling a mobile navigation module to a vehicle audio module comprises the vehicle audio module and the mobile navigation module.

The vehicle audio module outputting an audio signal to the vehicle compartment comprises a first operating unit for providing an interface to the user and outputting status information of the vehicle audio module, a first control unit controlling the first operating unit, receiving signals from the first operating unit and transmitting signals to the first operating unit, and a first coupler for coupling the mobile navigation module to the vehicle audio module and providing a signal and data exchange between the vehicle audio module and the mobile navigation module.

The mobile navigation module comprises a second operating unit for providing an interface to the user and outputting status information of the mobile navigation module, a second control unit controlling the second operating unit, receiving signals from the second operating unit and transmitting signals to the second operating unit, and a second coupler for coupling the mobile navigation module to the vehicle audio module and providing a signal and data exchange between the vehicle audio module and the mobile navigation module.

Upon detection that the mobile navigation module is coupled to the vehicle audio module, the first control unit controls at least parts of the second operating unit.

In such a vehicle electronic system, when the mobile navigation module is coupled to the vehicle audio module, the mobile navigation module can be mounted in front of the vehicle audio module obstructing displays or buttons of the vehicle audio module, but the vehicle audio module remains still operable as it can be operated via the second operating unit of the mobile navigation module and furthermore an integration of the display output of the vehicle audio module and the mobile navigation module can be accomplished by the first control unit controlling display outputs on the second operating unit.

According to an embodiment of the vehicle electronic system, the first control unit receives data from the second operating unit, processes the data received from the second operating unit and outputs data to the second operating unit. Furthermore, the second control unit can receive data from the first operating unit, process the data received from the first operating unit and output data to the first operating unit.

In a vehicle electronic system like this the operating units of both the vehicle audio module and the mobile navigation module can be controlled and therefore used as inputs and outputs of the user interface by the first control unit of the vehicle audio module as well as of the second control unit of the mobile navigation module. This offers an integrated operation of the combination of the mobile navigation module and the vehicle audio module and ensures furthermore that display outputs and/or control means of either the first operating unit or the second operating unit which are obstructed when the mobile navigation module is mounted at the vehicle audio module can be substituted by appropriate displays and means of the obstructing module. Therefore an integrated and complete operation of both modules, the mobile navigation module and the vehicle audio module, is secured.

According to another embodiment, the first and the second couplers comprise an electrical connection, an optical connection, or a radio frequency connection for the signal and data exchange between the vehicle audio module and the mobile navigation module.

Using an electrical connection is an economic and reliable means, which can be easily integrated into a coupler coupling the mobile navigation module and the vehicle audio module. In case higher bit rates between the mobile navigation module and the vehicle audio module are required or in case of stronger requirements concerning electromagnetical compatibility an optical connection may be advantageous. Finally, a radio frequency connection provides a connection between the vehicle audio module and the mobile navigation module without connecting the mobile navigation module physically to the vehicle audio module and enables therefore the integrated use of the mobile navigation module in the vehicle electronic system although the mobile navigation module may be placed in for example a bag or a pocket of the user.

According to another embodiment of the vehicle electronic system, the vehicle audio module comprises a power supply providing an electrical power supply for the mobile navigation module via the vehicle audio module through the first and second couplers.

In that the mobile navigation module is provided with electrical power from the vehicle audio module, the standby and operating times of the mobile navigation module are no longer limited to the standby or operating times based on a battery capacity of the mobile navigation module. Providing the electrical power for the mobile navigation module through the first and second couplers avoids the use of dedicated cables connecting the mobile navigation module with a power supply of the vehicle, for example a cigarette lighter.

According to another embodiment of the vehicle electronic system, the mobile navigation module comprises a rechargeable power supply, e.g. a rechargeable battery, and the vehicle audio module comprises charging means for charging the rechargeable power supply, wherein the rechargeable power supply is recharged by the charging means, when the mobile navigation module is coupled to the vehicle audio module.

Such an embodiment enables to recharge the mobile navigation device whenever it is coupled to and operated in the vehicle and enables therefore the recharging of the mobile navigation module during a longer journey without using an additional charger for the mobile navigation module.

According to another embodiment of the vehicle electronic system, the first and second operating units comprise a display, a control button, a speech control microphone and/or a loudspeaker.

Having a display and control buttons in each operating unit enables the vehicle audio module as well as the mobile navigation module to be operable independently, when the mobile navigation module is decoupled from the vehicle audio module. A speech control microphone enables the driver of the vehicle to operate the vehicle electronic system in a hands-free operating mode, which improves the driving safety. Audio outputs via a loudspeaker, for example for routing information, further improves the driving safety.

According to still another embodiment of the vehicle electronic system, the mobile navigation module comprises an access identifier and the vehicle audio module comprises an access identifier reader and a means for verifying an access identifier. After coupling the mobile navigation module to the vehicle audio module the access identifier reader of the vehicle audio module reads out the access identifier of the mobile navigation module and the means for verifying the access identifier verifies the read out access identifier of the mobile navigation module. Upon positive verification, the vehicle audio module grants access to the vehicle and/or allows to start the vehicle.

As the mobile navigation module is easily mountable to and detachable from the vehicle audio module, the access identifier of the mobile navigation module may function as an additional or as a main key for starting the vehicle. Additionally, if a coupling of the mobile navigation module to the vehicle audio module is accomplished via a radio frequency connection, the access identifier can also be used to grant access to the vehicle without mounting the mobile navigation module at the vehicle audio module, but just by bringing the mobile navigation module near to the vehicle audio module. Therefore, the mobile navigation module may substitute the car key and therefore reduces the number of things a user of the vehicle and the vehicle electronic system has to carry around.

According to yet another embodiment of the vehicle electronic system, the vehicle audio module comprises a sensor data receiving unit which is connected to sensors of the vehicle. The sensor data may e.g. comprise the speed of the vehicle and/or the steering angle of the vehicle. The sensor data receiving unit transmits the sensor data retrieved from the vehicle to a positioning unit of the mobile navigation module when the mobile navigation module is coupled to the vehicle audio module. The positioning unit uses the sensor data for supporting the position determination of the vehicle.

By using the sensor data retrieved from the vehicle additionally to the regular position determining means of the mobile navigation module, for example a satellite antenna receiving positioning data from a global positioning system based on satellites, the accuracy of the position determination can be increased, when the mobile navigation system is coupled to the vehicle audio module.

According to an embodiment of the vehicle electronic system, the first coupler comprises a detachable snap-in mechanism mounted at the front side of the vehicle audio module. The second coupler comprises a counterpart of the detachable snap-in mechanism provided at the backside of the mobile navigation module. The coupling of the mobile navigation module to the vehicle audio module comprises the inserting of the mobile navigation module into the detachable snap-in mechanism.

In that the mobile navigation module is fixedly mounted at the vehicle audio module after coupling, the display of the operating unit of the mobile navigation module is easily readable from the driver's or co-driver's seat, control buttons of the mobile navigation module are easily accessible and operable and a danger emerging from the mobile navigation module during an accident of the vehicle is substantially reduced.

According to still another embodiment of the vehicle electronic system, the mobile navigation module comprises a mobile audio player.

This feature enables a user of the vehicle electronic system to hear his favourite music stored on the mobile navigation module, for example as MP3 files, during use of the mobile navigation module in the vehicle as well as using the mobile navigation module outside the vehicle during hiking or biking.

According to another embodiment, the vehicle comprises a satellite antenna connected to the vehicle audio module for receiving radio frequency signals with which the position of the vehicle can be determined. The signal and data exchange between the mobile navigation module and the vehicle audio module comprises the signals received from the satellite antenna.

By using the satellite antenna of the vehicle a better receive quality of the satellite signals can be achieved and therefore the accuracy for the position determination of the vehicle enhanced.

According to another embodiment of the vehicle electronic system, the first control unit prioritizes the data to be output on the first and second operating units. Data of higher priority suppresses data of lower priority.

As a lot of data has to be processed and output by the vehicle electronic system a priorization of the output data is useful to avoid confusion of the driver. This refers to visual outputs via a display in the same way as to audible outputs via the loudspeakers of the vehicle compartment. The audible output may comprise music, traffic related massages and routing commands of the navigation system.

The invention will now be described in more detail with reference to the accompanying drawings, in which:
Fig. 1A shows a front view of a vehicle audio module, when no mobile navigation module is attached to the vehicle audio module;
Fig. 1B shows a front view of a mobile navigation module;
Fig. 1C shows a top view of the mobile navigation module of Fig. 1B;
Fig. 2 shows a front view of the vehicle audio module, wherein a mobile navigation module is attached to the vehicle audio module;
Fig. 3 shows a schematic view of the vehicle electronic system.

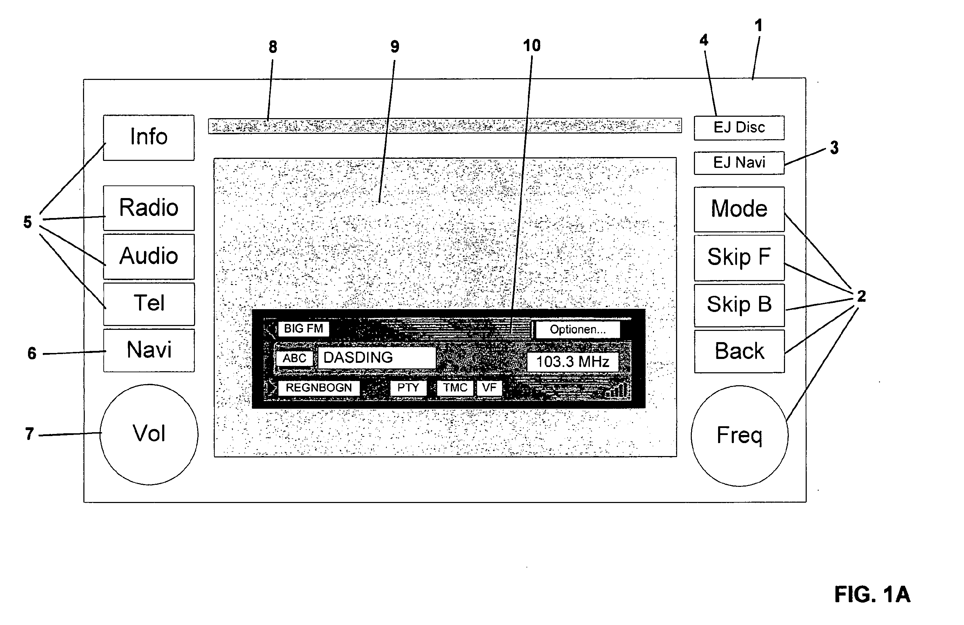

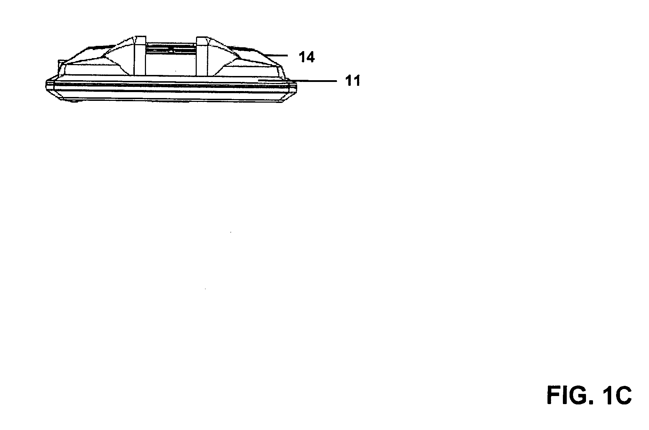

Fig. 1A shows a front view of a vehicle audio module 1. The vehicle audio module 1 may comprise a vehicle radio system, a vehicle compact disc player, a vehicle entertainment system or the like. The vehicle audio module 1 comprises a plurality of control buttons 2-7, a slot 8 for inserting a compact disk, a first coupler 9 for coupling a mobile navigation module to the vehicle audio module 1 and providing a signal and data exchange between the vehicle audio module 1 and the mobile navigation module, and a display 10. The vehicle audio module 1 can be mounted in a dashboard of a vehicle in such a way that the front side of the vehicle audio module as shown in Fig. 1A is located to be easily viewable and controllable by a driver or a codriver of the vehicle. The buttons 2-7 are provided for controlling the vehicle audio module 1 and the display 10 is provided to output status information of the vehicle audio module 1 to the user. In the following, the user interface of the vehicle audio module 1 comprising the control buttons 2-7 and the display 10 is called the first operating unit. The first operating unit may additionally comprise further input and output means for supporting the interface to the user, for example a microphone for receiving speech for a speech controlled operating of the vehicle audio module 1 and loudspeakers outputting an audio signal to the vehicle compartment providing status information about the vehicle audio module.

The first coupler 9 is adapted for receiving the mobile navigation module via a detachable snap-in mechanism which enables a fast insertion and removal of the mobile navigation module into and from the vehicle audio module 1.

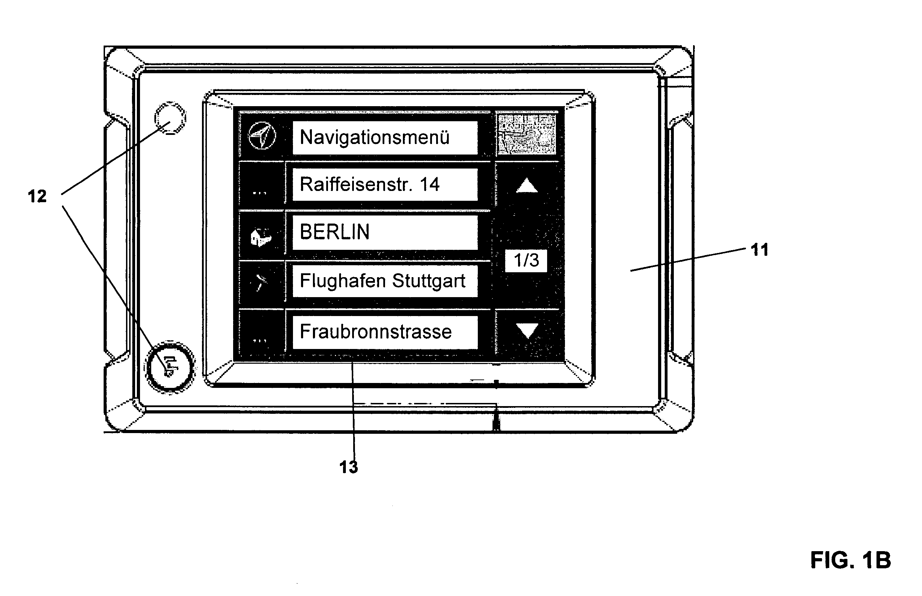

A front view and a top view of an embodiment of the mobile navigation module 11 is shown in Fig. 1B and 1C. The mobile navigation module 11 may for example comprise a satellite based mobile navigation module with an autonomous navigation data base or a server based mobile navigation module having a radio frequency data connection to a data communication network and to a navigation server for determining the position of the mobile navigation module and determining routing information. Further, the mobile navigation module may also comprise a mobile cellular phone determining the position of the phone either based on satellite information or based on information provided by the cellular network and providing routing information either based on autonomous routing information stored in the phone or based on routing information retrieved from a server provided in the cellular network.

The mobile navigation module 11 comprises a plurality of operating buttons 12, a display 13, and a second coupler 14 for coupling the mobile navigation module 11 to the vehicle audio module 1 and providing a signal and data exchange between the vehicle audio module 1 and the mobile navigation module 11. The display 13 may be a touchscreen which provides further operating means for controlling the mobile navigation module 11. The control buttons 12, the touchscreen of the display 13, and the display 13 provide a user interface for controlling the mobile navigation module 11, for example inputting a destination address and starting a route calculation to the destination, and outputting status information of the mobile navigation module, for example routing information on a map or routing commands for guiding the user to the desired destination. In the following, this user interface of the mobile navigation module 11 will be called second operating unit.

As can be seen in Fig. 1C, a second coupler 14 is provided on the backside of the mobile navigation module 11. This second coupler 14 is a counterpart to the first coupler 9 of the vehicle audio module 1 and enables an easy mounting of the mobile navigation module 11 at the vehicle audio module 1, by simply clippling the mobile navigation module 11 onto the first coupler 9 of the vehicle audio module 1. The snap-in mechanism of the first coupler 9 and the second coupler 14 provide a secure fixing of the mobile navigation module 11. Furthermore, the couplers provide a signal and data exchange between the vehicle audio module 9 and the mobile navigation module 11.

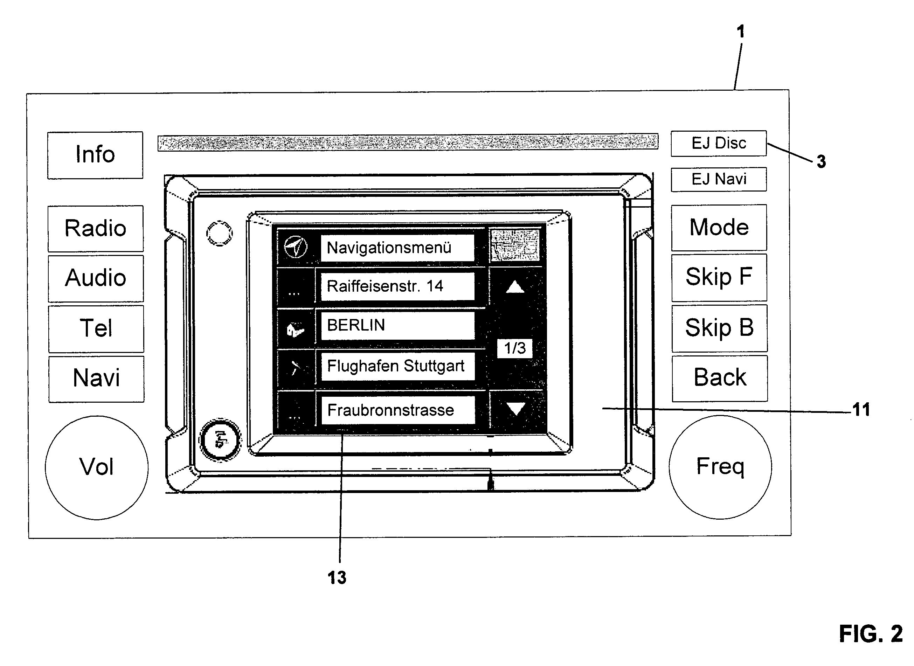

Fig. 2 shows the state when the mobile navigation module 11 is mounted at the vehicle audio module 1. As can be seen, in this embodiment, the display 10 of the vehicle audio module 1 is obstructed by the mobile navigation module 11 when the mobile navigation module 11 is attached to the vehicle audio module 1. Therefore, in this case the second operating unit, that means the display 13 is also used for outputting status information of the vehicle audio module 1. Furthermore, some of the control buttons 2-7 are now used to control the mobile navigation module 13. Vice versa, also the control buttons 12 and especially the touchscreen of the display 13 of the mobile navigation module 11 are now also usable for controlling the vehicle audio module 1. An additional control button 3 is provided at the vehicle audio module 1 for releasing the mobile navigation module 13 from the vehicle audio module 1.

When coupled to the vehicle audio module 1, the mobile navigation module 11 may use all features of the first control unit of the vehicle audio module 1, especially for example the audio output to the vehicle compartment for outputting routing information. As simultaneously other audio sources, for example a radio receiver or a CD player of the vehicle audio module 1 are outputting audio information to the vehicle compartment, a first control unit of the vehicle audio module 1 prioritizes and mixes the different audio sources before outputting the audio signals to the vehicle compartment. Prioritizing may comprise a lowering of the volume of audio sources with lower priority, for example music from a CD, before mixing the audio sources together and outputting them to the vehicle compartment. This ensures that a driver of the vehicle notices audio outputs of a higher priority, for example routing information, although audio outputs of lower priority are output at the same time, for example music from a CD player.

Visible outputs, for example radio frequency information, CD track information, a map of the mobile navigation module 11, or a routing information of the mobile navigation module 11, may also be prioritized and mixed by the first control unit of the vehicle audio module 1 before they are output on the display 13 of the mobile navigation module 11.

When the mobile navigation module 11 is detached from the vehicle audio module 1, both modules are usable as individual separate devices, that is, the vehicle audio module functions as a radio receiver and/or CD player outputting music and radio information to the vehicle's compartment and the mobile navigation module 11 is usable independently of the vehicle as a navigation device for hiking, biking and the like.

Although in the foregoing description the mobile navigation module 11 is coupled to the vehicle audio module 1 by inserting the mobile navigation module 11 into a snap-in mechanism 9 provided at the vehicle audio module 1, wherein the snap-in mechanism provides an electrical or optical connection for a signal and data exchange between the vehicle audio module 1 and the mobile navigation module 11, the signal and data exchange may also be accomplished by a wireless communication and therefore a physical connection between the mobile navigation module 11 and the vehicle audio module 1 is not necessary for coupling the two modules.

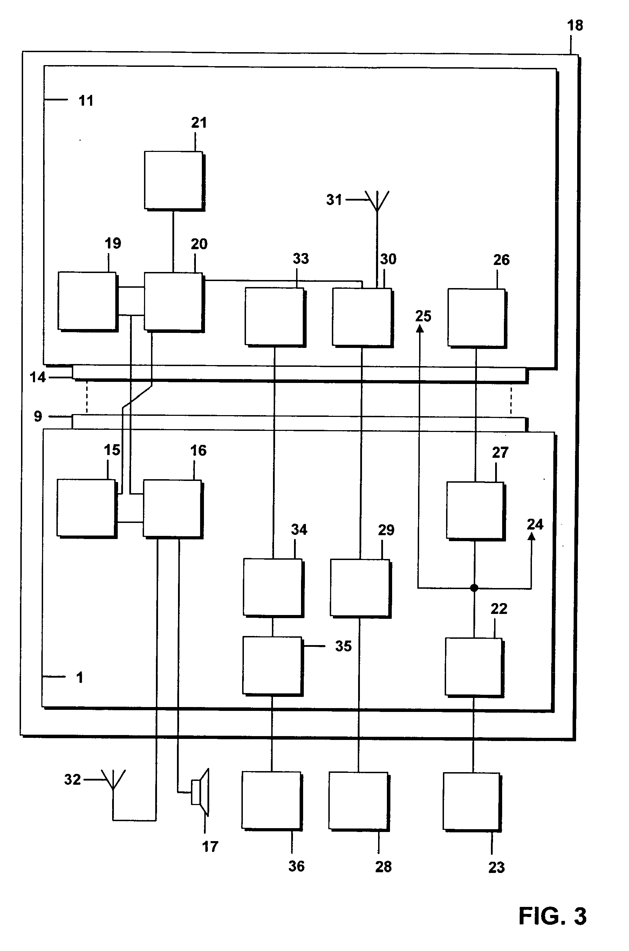

Fig. 3 shows a vehicle electronic system 18 comprising a mobile navigation module 11 and a vehicle audio module 1.

The vehicle audio module 1 comprises a first operating unit 15 and a first control unit 16. The first operating unit 15 may comprise a plurality of control buttons, a display, a microphone for speech input, and/or an audio output. Thus, the first operating unit 15 provides an interface to the user of the vehicle audio module 1 for controlling the features of the video audio module 1, for example a radio receiver and a CD player, and for outputting status information of the vehicle audio module 1 to the user. The first control unit 16 receives user inputs to the first operating unit 15 from the first operating unit 15 and performs the user-initiated actions on the vehicle audio module 1. In return, the first control unit 16 sends data to be output to the user to the first operating unit 15. Furthermore, the vehicle audio module 1 comprises a first coupler 9 for coupling a mobile navigation module to the vehicle audio module 1.

The mobile navigation module 11 comprises a second operating unit 19 connected to a second control unit 20. The second operating unit 19 comprises control buttons and a display as shown in Fig. 1B, for providing a user interface for controlling the mobile navigation module 11. When the user activates a control button 12 or touches the touchscreen of the display 13, this information is sent from the second operating unit 19 to the second control unit 20 and the second control unit 20 initiates or performs the required action in the mobile navigation module 11. In return, the second control unit 20 controls the output means of the second operating unit 19, for example the display 13, for outputting status information, for example map information or routing information. Furthermore, the mobile navigation module 11 comprises a second coupler 14 for coupling the mobile navigation module 11 to the vehicle audio module 1 and providing a signal and data exchange between the video audio module 1 and the mobile navigation module 11.

When coupling the mobile navigation module 11 to the vehicle audio module 1 via the first coupler 9 and the second coupler 14, a signal and data exchange between the first control unit 16 and the second operating unit 19 and the second control unit 20 is set up. The first control unit 16 is now controlling the first and the second operation units 15 and 19 which means in view of the embodiment of Figs. 1 and 2 that the first control unit 16 redirects all the display outputs from the first operating unit 15 to the second operating unit 19, as the display 10 of the first operating unit 15 is obstructed by the mobile navigation module 11. Furthermore, the first control unit 16 is now capable of receiving control inputs from the user via the touchscreen of the display 13 of the second operating unit 19 of the mobile navigation module 11 for operating functions of the audio vehicle module 1.

As the first control unit 16 is additionally connected with the second control unit 20, the second control unit 20 can transmit audio outputs of the mobile navigation module 11 to the first control unit 16 which then outputs these audio outputs via a loudspeaker 17 of the vehicle to the vehicle compartment. This allows an output of audio data, for example routing information or music data of a mobile audio player 21 comprised in the mobile navigation module 11 to the vehicle compartment via the vehicle loudspeaker system 17.

According to the embodiment of Fig. 3 the second control unit 20 is additionally connected with the first operating unit 15. This enables the second control unit 20 to use for example input means of the first operating unit 15, for example control buttons or a speech control microphone for operating the mobile navigation module 11.

An output of output data from the first control unit 16 on the second operating unit 19 can also be accomplished by sending the data to be output from the first control unit 16 to the second control unit 20 which then outputs the data on the second operating unit 19. This enables the output data of the first control unit 16 and the second control unit 20 to be properly mixed up and prioritized before being output on the second operating unit 19. The same applies to data to be output on the first operating unit 15.

As shown in Fig. 3, the vehicle audio module 1 further comprises a power supply 22, which is connected to the vehicle battery 23. The power supply 22 provides the vehicle audio module 1 with electrical power as indicated by arrow 24. Furthermore, the power supply 22 provides electrical power to the mobile navigation module 11 via the first and second couplers 9 and 14 as indicated by arrow 25. The mobile navigation module 11 comprising a battery 26 for supplying the mobile navigation module 11 with electrical energy is in the coupled state supplied with electrical energy from the vehicle battery 23 which substantially increases the operating time of the mobile navigation module 11.

According to the embodiment shown in Fig. 3 the vehicle audio module 1 comprises further a charging means 27, the input of which is connected with the power supply 22. The output of the charging means 27 is connected with the battery 26 of the mobile navigation module 11 via the first and second couplers 9 and 14. Therefore, when the mobile navigation module 11 is connected to the vehicle audio module 1, the battery 26 is recharged by the charging means 27. The charging means 27 can also be located in the mobile navigation system 11 and supplied with electrical energy via the vehicle audio module 1.

In the embodiment of Fig. 3 the vehicle audio module 1 is additionally connected to a sensor 28 of the vehicle and comprises a sensor data receiving unit 29. The sensor data receiving unit 29 is connected with a positioning unit 30 of the mobile navigation module 11. The positioning unit 30 is connected to the second control unit 20 and serves for determining the global position of the mobile navigation module 11. In the stand-alone operation of the mobile navigation module 11, the positioning unit 30 uses for example an internal satellite antenna 31 of the mobile navigation module 11 for determining the global position of the mobile navigation module 11. When connected to the vehicle audio module 1 providing additional sensor data of the vehicle, for example speed information and steering angle information, the positioning unit 30 uses this sensor data additionally to the positioning data retrieved from the satellite antenna for increasing the accuracy of the position determination. Furthermore, if the vehicle is provided with a satellite antenna 32 and the vehicle audio module 1 is connected to the satellite antenna 32, the first control unit 16 can receive the information received from the satellite via the satellite antenna 32, transmit this information to the second control unit 20 via the first and second couplers 9 and 14 and the second control unit 20 transmits this information to the positioning unit 30. As the antenna 32 is typically mounted at the outside of the vehicle, the quality of the received signal of the antenna 32 is much better than the signal received from the internal antenna 31 of the mobile navigation module 11. Therefore, using the external antenna 32 by the mobile navigation module 11, when the mobile navigation 11 is coupled to the vehicle audio module 1, increases the accuracy of the position determination of the mobile navigation module 11.

The embodiment shown in Fig. 3 shows furthermore an access identifier 33 comprised in the mobile navigation module 11 and an access identifier reader 34 and a means for verifying an access identifier 35 comprised in the vehicle audio module 1. When the mobile navigation module 11 is connected to the vehicle audio module 1, the access identifier reader 34 is connected to the access identifier 33 via the first and second couplers 9 and 14. Furthermore, the access identifier reader 34 is connected with the means for verifying an access identifier 35, and the means for verifying an access identifier 35 is connected to a vehicle access system and a vehicle ignition system 36. Upon coupling of the mobile navigation module 11 to the vehicle audio module 1 the access identifier reader 34 reads out the access identifier 33 and transmits the access identifier information to the means for verifying an access identifier 35. The means for verifying an access identifier 35 compares the received access identifier information with an internal access identifier or an internal list of access identifiers and transmits, in the case of a positive verification, a signal to the vehicle access and ignition system 36 for granting access to the vehicle and to the ignition system. The vehicle access system may comprise an automatic door unlocking mechanism and receiving a signal for granting access to the vehicle results in an unlocking of the doors of the vehicle. Thus, in case the first and second couplers 9 and 14 comprise a wireless radio frequency connection for the signal and data exchange between the vehicle audio module 1 and the mobile navigation module 11, a user of the mobile navigation module 11 can unlock the doors of the vehicle by just bringing the mobile navigation module 11 into the reach of the radio frequency connection of the first and second couplers 9 and 14 and optionally by pressing an unlock button of the mobile navigation module 11. Furthermore, starting of the engine of the vehicle may be released by the means for verifying an access identifier sending a release signal to the ignition system 36 of the vehicle upon positive verification of the access identifier 33 of the mobile navigation module 11.

## Claims

1. A vehicle electronic system (18) coupling a mobile navigation module (11) to a vehicle audio module (1), the vehicle electronic system (18) comprising:
- the vehicle audio module (1) outputting an audio signal to the vehicle compartment, the vehicle audio module (1) comprising:
- a first operating unit (15) for providing an interface to the user and outputting status information of the vehicle audio module (1),
- a first control unit (16) controlling the first operating unit (15), receiving signals from the first operating unit (15) and transmitting signals to the first operating unit (15), and
- a first coupler (9) for coupling the mobile navigation module (11) to the vehicle audio module (1) and providing a signal and data exchange between the vehicle audio module (1) and the mobile navigation module (11),
- the mobile navigation module (11) comprising:
- a second operating unit (19) for providing an interface to the user and outputting status information of the mobile navigation module (11),
- a second control unit (20) controlling the second operating unit (19), receiving signals from the second operating unit (19) and transmitting signals to the second operating unit (19), and
- a second coupler (14) for coupling the mobile navigation module (11) to the vehicle audio module (1) and providing a signal and data exchange between the vehicle audio module (1) and the mobile navigation module (11),
**characterized in that**
upon detection that the mobile navigation module (11) is coupled to the vehicle audio module (1) the first control unit (16) controls at least parts of the second operating unit (19).

2. The vehicle electronic system (18) according to claim 1,
wherein the first control unit (16) receives data from the second operating unit (19), processes the data received from the second operating unit (19) and outputs data to the second operating unit (19).

3. The vehicle electronic system (18) according to claim 1 or 2,
wherein the second control unit (20) receives data from the first operating unit (15), processes the data received from the first operating unit (15) and outputs data to the first operating unit (15).

4. The vehicle electronic system (18) according to any of the preceding claims, wherein the first and second couplers (9, 14) comprise an electrical connection, an optical connection, or a radio frequency connection for the signal and data exchange between the vehicle audio module (1) and the mobile navigation module (11).

5. The vehicle electronic system (18) according to any of the preceding claims, said vehicle audio module (1) comprises a power supply (22) providing an electrical power supply (25) for the mobile navigation module (11) via the vehicle audio module (1) through the first and second couplers (9, 14).

6. The vehicle electronic system (18) according to any of the preceding claims, wherein the mobile navigation module (11) comprises a rechargeable power supply (26) and the vehicle audio module (1) comprises charging means (27) for charging the rechargeable power supply (26), the rechargeable power supply (26) is recharged by the charging means (27), when the mobile navigation module (11) is coupled to the vehicle audio module (1).

7. The vehicle electronic system (18) according to any of the preceding claims, wherein the first and second operating units (15, 19) each comprise a display (10, 13), a control button (2-7, 12), a speech control microphone and/or a loudspeaker (17).

8. The vehicle electronic system (18) according to any of the preceding claims, wherein the mobile navigation module (11) comprises an access identifier (33) and the vehicle audio module (1) comprises an access identifier reader (34) and a means for verifying an access identifier (35), wherein, upon positive verification, the vehicle audio module (1) grants access to the vehicle and/or allows to start the vehicle.

9. The vehicle electronic system (18) according to any of the preceding claims, wherein the vehicle audio module (1) comprises a sensor data receiving unit (29) connected to sensors (28) of the vehicle and transmitting sensor data retrieved from the vehicle to a positioning unit (30) of the mobile navigation module (11) for supporting the position determination of the positioning unit (30), when the mobile navigation module (11) is coupled to the vehicle audio module (1).

10. The vehicle electronic system (18) according to claim 9, wherein the sensor data comprise the speed of the vehicle and/or the steering angle of the vehicle.

11. The vehicle electronic system (18) according to any of the preceding claims, wherein the first coupler (9) comprises a detachable snap-in mechanism, the second coupler (14) comprises a counterpart of the detachable snap-in mechanism, and the coupling of the mobile navigation module (11) to the vehicle audio module (1) comprises the inserting of the mobile navigation module (11) into the detachable snap-in mechanism.

12. The vehicle electronic system (18) according to any of the preceding claims, wherein the mobile navigation module (11) comprises a mobile audio player (21).

13. The vehicle electronic system (18) according to any of the preceding claims, wherein the vehicle comprises a satellite antenna (32) connected to the vehicle audio module (1) for receiving RF signals with which the position of the vehicle can be determined and the signal and data exchange between the mobile navigation module (11) and the vehicle audio module (1) comprises the signals received from the satellite antenna (32).

14. The vehicle electronic system (18) according to any of the preceding claims, wherein the first control unit (16) prioritizes the data to be output on the first and second operating units (15, 19), wherein data of higher priority suppresses data of lower priority.

15. The vehicle electronic system (18) according to any of the preceding claims, wherein, upon detection that the mobile navigation module (11) is coupled to the vehicle audio module (1), audio data of the mobile navigation module (11) are output by the vehicle audio module (1) to the vehicle compartment.

16. The vehicle electronic system (18) according to claim 15, wherein the audio data of the mobile navigation module (11) are transmitted from the second control unit (20) through the second coupler (14) and the first coupler (9) to the first control unit (16).

17. The vehicle electronic system (18) according to claim 15 or 16, wherein the audio data of the mobile navigation module (11) are mixed with the audio signal of the vehicle audio module (1) by the first control unit (16) and then output by the vehicle audio module (1) to the vehicle compartment.

18. The vehicle electronic system (18) according to any of the preceding claims, wherein, upon detection that the mobile navigation module (11) is coupled to the vehicle audio module (1), display data of the vehicle audio module (1) are displayed on a display (13) of the mobile navigation module (11).

19. The vehicle electronic system (18) according claim 18, wherein the display data of the vehicle audio module (1) are transmitted from the first control unit (16) through the first coupler (9) and the second coupler (14) to the second control unit (20).

20. The vehicle electronic system (18) according to any of the preceding claims, wherein the first operating unit (15) furthermore provides operating means capable for operating at least parts of the mobile navigation module (11).

21. The vehicle electronic system (18) according claim 20, wherein the operating means comprise a control button (2-7) and/or a speech control microphone.

22. The vehicle electronic system (18) according claim 20 or 21, wherein upon detection that the mobile navigation module (11) is coupled to the vehicle audio module (1), a signal generated upon operating the operating means is transmitted from the first control unit (16) through the first coupler (9) and the second coupler (14) to the second control unit (20).

23. A method for coupling a mobile navigation module (11) to a vehicle audio module (1),
the vehicle audio module (1) comprising:
- a first operating unit (15) for providing an interface to the user and outputting status information of the vehicle audio module (1), and
- a first control unit (16) controlling the first operating unit (15), receiving signals from the first operating unit (15) and transmitting signals to the first operating unit (15),
the mobile navigation module (11) comprising:
- a second operating unit (19) for providing an interface to the user and outputting status information of the mobile navigation module (11), and
- a second control unit (20) controlling the second operating unit (19), receiving signals from the second operating unit (19) and transmitting signals to the second operating unit (19),
the method comprising the steps of:
- controlling the first operating unit (15) by the first control unit (16),
- controlling the second operating unit (19) by the second control unit (20),
**characterized by**
- detecting, if the mobile navigation module (11) is coupled to the vehicle audio module (1),
- upon detection that the mobile navigation module (11) is coupled to the vehicle audio module (1), providing a signal and data exchange between the vehicle audio module (1) and the mobile navigation module (11),
- upon detection that the mobile navigation module (11) is coupled to the vehicle audio module (1), controlling at least parts of the second operating unit (19) by the first control unit (16).

24. The method according to claim 23,
wherein the first control unit (16) receives data from the second operating unit (19), processes the data received from the second operating unit (19) and outputs data to the second operating unit (19).

25. The method according to claim 23 or 24,
wherein the second control unit (20) receives data from the first operating unit (15), processes the data received from the first operating unit (15) and outputs data to the first operating unit (15).

26. The method according to any one of claims 23 to 25, wherein the mobile navigation module (11) comprises a rechargeable power supply (26) and the vehicle audio module (1) comprises charging means (27) for charging the rechargeable power supply (26), the method further comprises the step of, upon detection that the mobile navigation module (11) is coupled to the vehicle audio module (1), recharging the rechargeable power supply (26) by the charging means (27).

27. The method according to any one of claims 23 to 26, wherein the mobile navigation module (11) comprises an access identifier (33) and the vehicle audio module (1) comprises an access identifier reader (34) and a means for verifying an access identifier (35), wherein the method further comprises
- reading access identifier information from the access identifier (33) of the mobile navigation module (11),
- verifying the access identifier information
- upon positive verification, granting access to the vehicle and/or allowing to start the engine of the vehicle.

28. The method according to any one of claims 23 to 27, wherein the vehicle audio module (1) comprises a sensor data receiving unit (29) connected to sensors (28) of the vehicle and the method further comprises upon detection that the mobile navigation module (11) is coupled to the vehicle audio module (1):
- retrieving sensor data from the vehicle,
- transmitting sensor data to a positioning unit (30) of the mobile navigation module (11), and
- using the sensor data for determining the position of the vehicle.

29. The method according to any one of claims 23 to 28, further comprising the step of prioritizing the data to be output on the first and second operating units (15, 19), wherein data of higher priority suppresses data of lower priority.

30. The method according to any one of claims 23 to 29, further comprising the step of, upon detection that the mobile navigation module (11) is coupled to the vehicle audio module (1), outputting of audio data of the mobile navigation module (11) by the vehicle audio module (1) to the vehicle compartment.

31. The method according to claim 30, further comprising the step of mixing the audio data of the mobile navigation module (11) with the audio signal of the vehicle audio module (1).

32. The method according to any one of claims 23 to 31, further comprising the step of, upon detection that the mobile navigation module (11) is coupled to the vehicle audio module (1), displaying of display data of the vehicle audio module (1) on a display (13) of the mobile navigation module (11).

33. The method according to any one of claims 23 to 32, further comprising the steps of,
- providing operating means capable for operating at least parts of the mobile navigation module (11) at the first operating unit (15),
- generating a signal generated upon operating the operating means, and
- upon detection that the mobile navigation module (11) is coupled to the vehicle audio module (1), transmitting the signal generated upon operating the operating means from the first control unit (16) to the second control unit (20).
